# EUROPEAN PATENT APPLICATION

(11) **EP 4 596 179 A1**
(43) Date of publication of application: **06.08.2025**
(21) Application number: 24202272.1
(22) Date of filing: 24.09.2024
(51) Int. Cl.: B25J 9/16

(54) **REDUCTION OF INVERSE KINEMATIC CALCULATION TIME**

(30) Priority: 02.11.2023 US 202318500521
(71) Applicant: The Boeing Company, Arlington, VA 22202 (US)
(72) Inventor: Ko, William, Arlington, 22202 (US); Cochrane, Jason John, Arlington, 22202 (US)
(74) Representative: Arnold & Siedsma

(57) **Abstract**

Methods of reducing calculation time for inverse kinematics for a robotic arm are presented. An analytical solver is used based on design values for a robot type to generate an analytical solution of joint parameters to achieve a desired location of a tool center point of the robot type, wherein the robotic arm has the robot type. The analytical solution of joint parameters is provided as a seed value to a numerical solver for the robotic arm of the robot type. A numerical solution is determined using the numerical solver and the seed value, the numerical solution comprising joint parameters for the robotic arm to achieve the desired location of a tool center point of the robotic arm.

## Description

### BACKGROUND INFORMATION

### 1. Field:

The present disclosure relates generally to inverse kinematics and more specifically to reducing calculation time for inverse kinematics for a robotic arm.

### 2. Background:

Robot arm motion planning uses the calculation of inverse kinematics. For meaningful usage, calculations should be fast enough to allow real-time planning. However, each robot arm has its own set of as-manufactured length values for its respective components that influence accuracy of calculations. Inverse kinematic solving with calibrated parameters with as-manufactured values can be orders of magnitude slower than available analytical solvers.

Therefore, it would be desirable to have a method and apparatus that takes into account at least some of the issues discussed above, as well as other possible issues. For example, it would be desirable to provide inverse kinematic solving with a reduced time but a desired accuracy.

### SUMMARY

An example of the present disclosure provides a method, preferably a computer-implemented method, of reducing calculation time for inverse kinematics for a robotic arm. An analytical solver based on design values for a robot type is used to generate an analytical solution of joint parameters to achieve a desired location of a tool center point of the robot type. The robotic arm has the robot type. The analytical solution of joint parameters is provided as a seed value to a numerical solver for the robotic arm of the robot type. A numerical solution is determined using the numerical solver and the seed value, the numerical solution comprising joint parameters for the robotic arm to achieve the desired location of a tool center point of the robotic arm.

The method may further include determining as-manufactured values for components of the robotic arm. The as-manufactured values may comprise a number of manufactured lengths of a number of arm segments of the robotic arm. The method may further include generating an as-manufactured kinematic model of the robotic arm using the as-manufactured values, wherein the numerical solver comprises an algorithm utilizing the as-manufactured kinematic model.

The method may further include moving the robotic arm according to the numerical solution to place the tool center point of the robotic arm in the desired location. The method may further include performing a manufacturing operation using a tool at the tool center point of the robotic arm after moving the robotic arm according to the numerical solution.

The method may further include generating an as-designed kinematic model using the design values of the robot type, wherein the analytical solver comprises an algorithm utilizing the as-designed kinematic model.

Determining the numerical solution may comprise: translating the target coordinate between a global coordinate system and joint coordinates.

Another example of the present disclosure provides a method, preferably a computer-implemented method, of reducing calculation time for inverse kinematics for a robotic arm. Design values for components of a robot type are received. An analytical solver is developed using the design values. An analytical solution of joint parameters for the robot type is generated to achieve a desired location of a tool center point of the robot type, particularly using the analytical solver. As-manufactured values for the components of a robotic arm of the robot type are determined. The as-manufactured values and the analytical solution are provided to a numerical solver as input. A numerical solution comprising joint parameters for the robotic arm is generated to achieve a desired location of a tool center point.

The method may further include moving the robotic arm according to the numerical solution to place the tool center point of the robotic arm in the desired location. The method may also include performing a manufacturing operation using a tool at the tool center point of the robotic arm after moving the robotic arm according to the numerical solution.

The as-manufactured values may comprise a number of manufactured lengths of a number of arm segments of the robotic arm.

Determining the numerical solution may comprise translating the target coordinate between a global coordinate system and joint coordinates.

The method may further include generating a kinematic model of the robotic arm using the as-manufactured values, wherein the numerical solver comprises an algorithm utilizing the kinematic model.

Yet another example of the present disclosure provides a method, preferably a computer-implemented method, of reducing calculation time for inverse kinematics for a robotic arm. An analytical solution of joint parameters for a robot type is generated to achieve a desired location of a tool center point of the robot type using an analytical model formed using designed lengths of components of the robot type. As-manufactured values for the components of a robotic arm of the robot type are determined. The as-manufactured values and the analytical solution are provided to a numerical solver as input. A numerical solution comprising joint parameters for the robotic arm is generated to achieve a desired location of a tool center point, particularly using the numerical solver. The robotic arm is moved according to the numerical solution to place the tool center point of the robotic arm in the desired location.

The method may further include performing a manufacturing operation using a tool at the tool center point of the robotic arm after moving the robotic arm according to the numerical solution.

The as-manufactured values may comprise a number of manufactured lengths of a number of arm segments of the robotic arm.

The method may further include generating an as-manufactured kinematic model of the robotic arm using the as-manufactured values, wherein the numerical solver comprises an algorithm utilizing the as-manufactured kinematic model.

The method may further include generating an analytical model based on design values for the components of the robot type, wherein generating the analytical solution comprises generating the analytical solution by an analytical solver utilizing the analytical model.

Generating the numerical solution may comprise translating the target coordinate between a global coordinate system and joint coordinates.

The features and functions can be achieved independently in various examples of the present disclosure or may be combined in yet other examples in which further details can be seen with reference to the following description and drawings.

### BRIEF DESCRIPTION OF THE DRAWINGS

The novel features believed characteristic of the illustrative examples are set forth in the appended claims. The illustrative examples, however, as well as a preferred mode of use, further objectives and features thereof, will best be understood by reference to the following detailed description of an illustrative example of the present disclosure when read in conjunction with the accompanying drawings, wherein:
**Figure 1** is an illustration of an aircraft in accordance with an illustrative example;
**Figure 2** is an illustration of a block diagram of a manufacturing environment in accordance with an illustrative example;
**Figure 3** is an illustration of a robotic arm in a manufacturing environment in accordance with an illustrative example;
**Figure 4** is a flowchart of a method of reducing calculation time for inverse kinematics for a robotic arm in accordance with an illustrative example;
**Figure 5** is a flowchart of a method of reducing calculation time for inverse kinematics for a robotic arm in accordance with an illustrative example;
**Figure 6** is a flowchart of a method of reducing calculation time for inverse kinematics for a robotic arm in accordance with an illustrative example;
**Figure 7** is an illustration of an aircraft manufacturing and service method in a form of a block diagram in accordance with an illustrative example; and
**Figure 8** is an illustration of an aircraft in the form of a block diagram in which an illustrative example may be implemented.

### DETAILED DESCRIPTION

The illustrative examples recognize and take into account that in robotics, inverse kinematics is the process of calculating the angles of joints needed to reach a desired tip location. A robotic arm has as-manufactured or "real" parameters as well as variables of the robot including angles and joint lengths.

The illustrative examples provide a solver that produces calibrated inverse kinematics solutions faster than a traditional numerical-only solver while giving the complete solution set of an analytical solver. The provided illustrative methods decrease calibrated inverse kinematics computation time. Implementation of the algorithm in the illustrative examples allows precise robotic movement calculations without large motion planning computation times for scenarios such as offline planning where many thousands of such computations need to be performed.

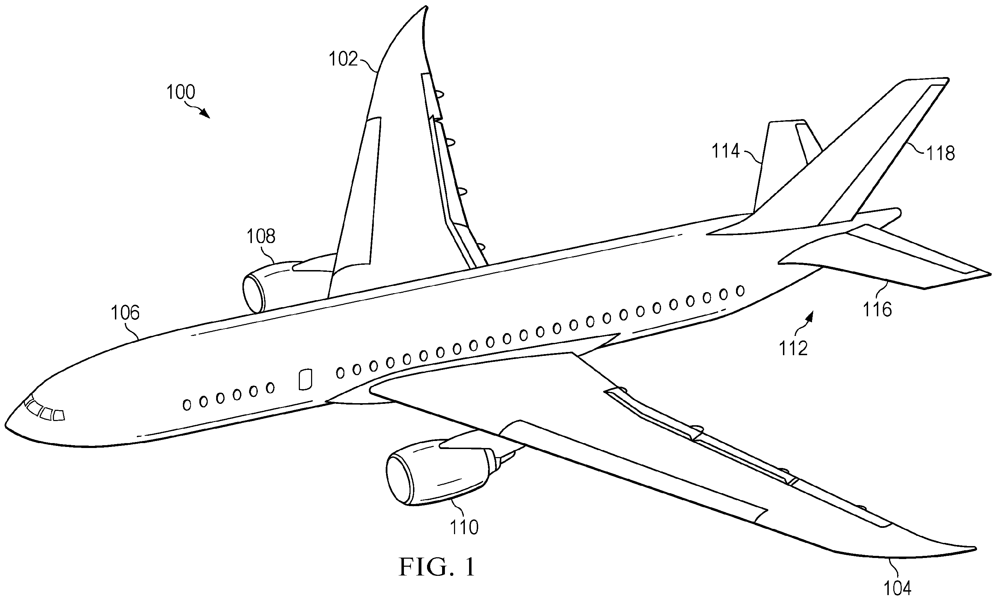

Turning now to **Figure 1****,** an illustration of an aircraft is depicted in accordance with an illustrative example. Aircraft **100** has wing **102** and wing **104** attached to body **106.** Aircraft **100** includes engine **108** attached to wing **102** and engine **110** attached to wing **104.**

Body **106** has tail section **112.** Horizontal stabilizer **114,** horizontal stabilizer **116,** and vertical stabilizer **118** are attached to tail section **112** of body **106.**

Aircraft **100** is an example of an aircraft that can have components manufactured using robots controlled using inverse kinematics determined using the methods of the illustrative examples. The inverse kinematics of the illustrative examples can be used to perform manufacturing operations on aircraft **100.**

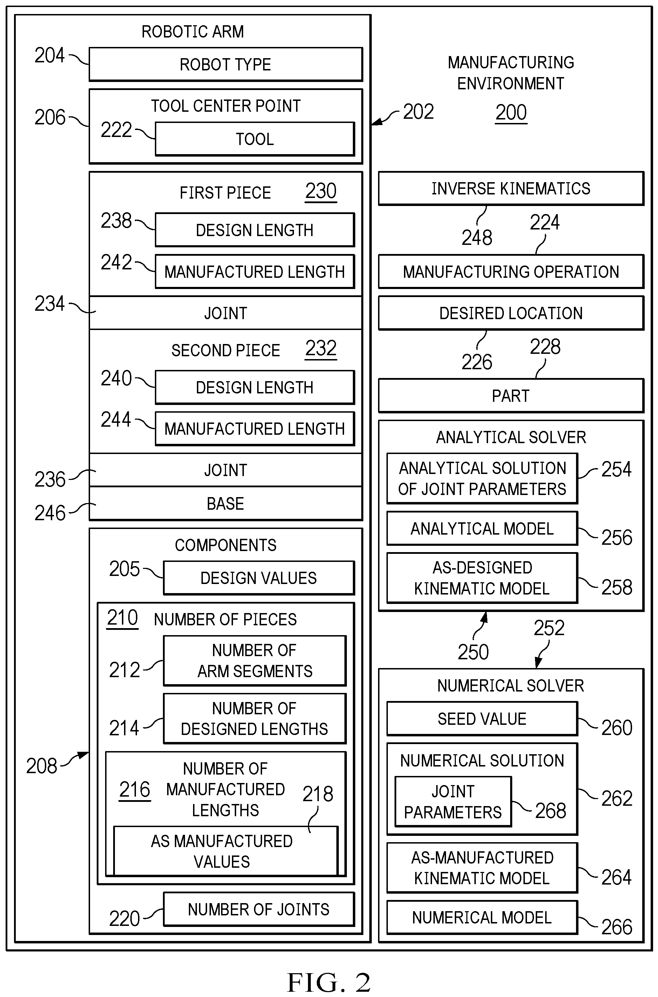

Turning now to **Figure 2****,** an illustration of a block diagram of a manufacturing environment is depicted in accordance with an illustrative example. Manufacturing environment **200** has robotic arm **202.** Robotic arm **202** is of robot type **204.** Robot type **204** is a design for a robot. Robot type **204** has design values **205** for components **208.** Robot arm **202** is a specific instance of robot type **204.**

Robotic arm **202** has tool center point **206.** Tool center point **206** is a location of robotic arm **202** to perform manufacturing operations. Tool center point **206** may be referred to as an operative location. To perform manufacturing operations using robotic arm **202,** tool center point **206** needs to be located at desired location **226** in manufacturing environment **200.**

Robotic arm **202** is formed by components **208.** Components **208** of robotic arm **202** include number of pieces **210** connected by number of joints **220.** In some illustrative examples, number of pieces **210** can be referred to as number of arm segments **212.** Number of pieces **210** have number of designed lengths **214.** Number of designed lengths **214** are the same as design values **205** of robot type **204.** Number of pieces **210** have number of manufactured lengths **216.**

As manufactured values **218** of robotic arm **202** comprise number of manufactured lengths **216.** As manufactured values **218** can also include angles of robotic arm **202.** In some illustrative examples, as manufactured values **218** can be described using Denavit-Hartenberg parameters.

The differences between number of manufactured lengths **216** and number of designed lengths **214** occur due to manufacturing tolerances. Manufacturing variability results in differences between number of designed lengths **214** of components **208** and number of manufactured lengths **216** of components **208.**

In this illustrative example, number of pieces **210** comprises first piece **230** and second piece **232.** First piece **230** is joined to second piece **232** by joint **234.** Second piece **232** is joined to base **246** by joint **236.** Joint **234** takes the form of any desirable type of joint. In some illustrative examples, joint **234** can take the form of a linear joint, a rotational joint, or a spherical joint. Joint **236** takes the form of any desirable type of joint. In some illustrative examples, joint **236** can take the form of a linear joint, a rotational joint, or a spherical joint.

First piece **230** has design length **238.** Design length **238** is one of number of designed lengths **214.** First piece **230** has manufactured length **242.** Manufactured length **242** is one of number of manufactured lengths **216.** A difference between design length **238** and manufactured length **242** is a result of manufacturing variability. The difference between design length **238** and manufactured length **242** results in difficulties performing inverse kinematics **248** for robotic arm **202.**

Second piece **232** has design length **240.** Design length **240** is one of number of designed lengths **214.** Second piece **232** has manufactured length **244.** Manufactured length **244** is one of number of manufactured lengths **216.** A difference between design length **240** and manufactured length **244** is a result of manufacturing variability. The difference between design length **240** and manufactured length **244** results in difficulties performing inverse kinematics **248** for robotic arm **202.**

Robotic arm **202** can be used to perform manufacturing operations, such as manufacturing operation **224,** on parts, such as part **228.** Robotic arm **202** has tool **222** attached to first piece **230.** Tool **222** is connected to robotic arm **202** to perform manufacturing operation **224.** Tool **222** is configured to perform manufacturing operation **224.** Tool center point **206** is an operating point created by tool **222.** In some illustrative examples, tool **222** is a permanent part of robotic arm **202.** In some illustrative examples, tool **222** is removable and replaceable with other tools. Changing tool **222** can also change the location of tool center point **206.**

Analytical solver **250** and numerical solver **252** are used in sequence to reduce the time to perform inverse kinematics **248** for robotic arm **202.** Analytical solver **250** and numerical solver **252** are used in sequence to reduce the time to determine joint parameters **268** for robotic arm **202.** Analytical solver **250** is used to determine a seed value **260** to reduce the computational time for determining numerical solution **262** in numerical solver **252.**

Analytical solver **250** can be used to form analytical solution of joint parameters **254.** Analytical solver **250** performs inverse kinematics **248** for robotic arm **202** in a set amount of time. Analytical solver **250** generates analytical solution of joint parameters **254** for robotic arm **202** in a set amount of time. The fixed computation time of analytical model **256** can be advantageous. However, analytical solution of joint parameters **254** has an undesirable level of precision. Analytical solver **250** is a deterministic formula or algorithm. In some illustrative examples, analytical solver **250** comprises an algorithm that utilizes as-designed kinematic model **258** to generate a kinematic result.

Numerical solver **252** is more precise than analytical solver **250.** However, numerical solver **252** is significantly slower than analytical solver **250.** Numerical solver **252** comprises an algorithm utilizing numerical model **266.** Numerical model **266** is as-manufactured kinematic model **264** that generates a kinematic result.

To determine joint parameters for robotic arm **202** according to the illustrative examples, analytical solver **250** determines analytical solution of joint parameters **254** using design values **205** of robot type **204.** Analytical solution of joint parameters **254** can achieve desired location **226** of tool center point **206** of robot type **204.** Desired location **226** may also be referred to as a target coordinate. The target coordinate is typically specified in a global coordinate system. Coordinates can be converted from the global coordinate system to joint coordinates during inverse kinematics **248.**

Analytical solution of joint parameters **254** is provided as seed value **260** to numerical solver **252.** Numerical solution **262** is determined using numerical solver **252** and seed value **260.** Numerical solution **262** comprises joint parameters **268** for robotic arm **202** to achieve desired location **226** of tool center point **206** of robotic arm **202.**

Numerical solver **252** comprises an algorithm utilizing as-manufactured kinematic model **264.** As-manufactured kinematic model **264** is created using as manufactured values **218.** Analytical solution of joint parameters **254** provides seed value **260** that reduces calculation time of numerical solver **252.** Seed value **260** allows for determination of numerical solution **262** in a desired amount of time.

After determining numerical solution **262,** robotic arm **202** is moved according to numerical solution **262** to place tool center point **206** of robotic arm **202** in desired location **226.** Manufacturing operation **224** is then performed using tool **222** at tool center point **206** of robotic arm **202** after moving robotic arm **202** according to numerical solution **262.**

The illustration of manufacturing environment **200** in **Figure 2** is not meant to imply physical or architectural limitations to the manner in which an illustrative example may be implemented. Other components in addition to or in place of the ones illustrated may be used. Some components may be unnecessary. Also, the blocks are presented to illustrate some functional components. One or more of these blocks may be combined, divided, or combined and divided into different blocks when implemented in an illustrative example.

For example, in some illustrative examples, number of pieces **210** can include more than two pieces.

In some illustrative examples, number of pieces **210** comprises three arm segments. In other illustrative examples, joint parameters **268** can be determined using analytical solver **250** and numerical solver **252** for a different robot type other than a robotic arm.

Additionally, although analytical solver **250** is described as generating analytical solution of joint parameters **254,** analytical solver **250** can generate multiple analytical solutions. In these illustrative examples, the multiple analytical solutions are provided to numerical solver **252** as seeds for numerical solver **252.**

Analytical solver **250** produces all possible solutions. In this example, all possible solutions are all different configurations for robotic arm **202** that can achieve positioning tool center point **206** at desired location **226.** In contrast, numerical solver **252** produces one or fewer solutions each time numerical solver **252** is run.

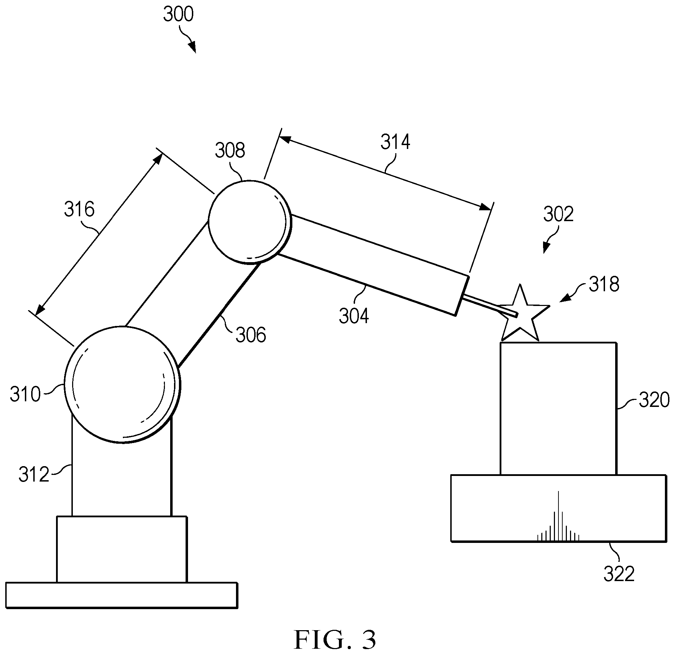

Turning now to **Figure 3****,** an illustration of a robotic arm in a manufacturing environment is depicted in accordance with an illustrative example. Robotic arm **300** is a physical implementation of robotic arm **202** of **Figure 2****.**

Robotic arm **300** comprises tool center point **302.** To perform a manufacturing operation on part **320** using tool **318,** tool center point **302** is moved to a desired location using inverse kinematics. In some illustrative examples, desired location can be referred to as a target coordinate. To determine the joint parameters for robotic arm **300** using inverse kinematics, the design values and as-manufactured values for components of robotic arm **300** are determined and used.

Robotic arm **300** comprises first piece **304** and second piece **306.** First piece **304** and second piece **306** are arm segments of robotic arm **300.** First piece **304** is joined to second piece **306** by joint **308.** Second piece **306** is joined to base **312** by joint **310.**

Robotic arm **300** is a specific instance of a robot type. Although a robot type has design values for arm segment lengths, variation occurs during manufacturing. As a result of manufacturing variations, first piece **304** of robotic arm **300** has as-manufactured length **314.** As a result of manufacturing variations, second piece **306** of robotic arm **300** has as-manufactured length **316.**

To reduce inverse kinematics calculations for robotic arm **300,** an analytic solution using as-designed lengths for first piece **304** and second piece **306** can be provided to a numerical solver. The numerical solver uses as-manufactured length **314,** as-manufactured length **316,** and the analytic solution to determine a numerical solution at a greatly reduced time.

After determining the numerical solution using the numerical solver, the numerical solution is used to move robotic arm **300** to place tool center point **302** at a desired location. After moving robotic arm **300,** a manufacturing operation is performed on part **320** using tool **318.** In this illustrative example, part **320** rests on support **322.** However, in other illustrative examples, a manufacturing operation can be performed on a large structure, such as aircraft **100** of **Figure 1****.**

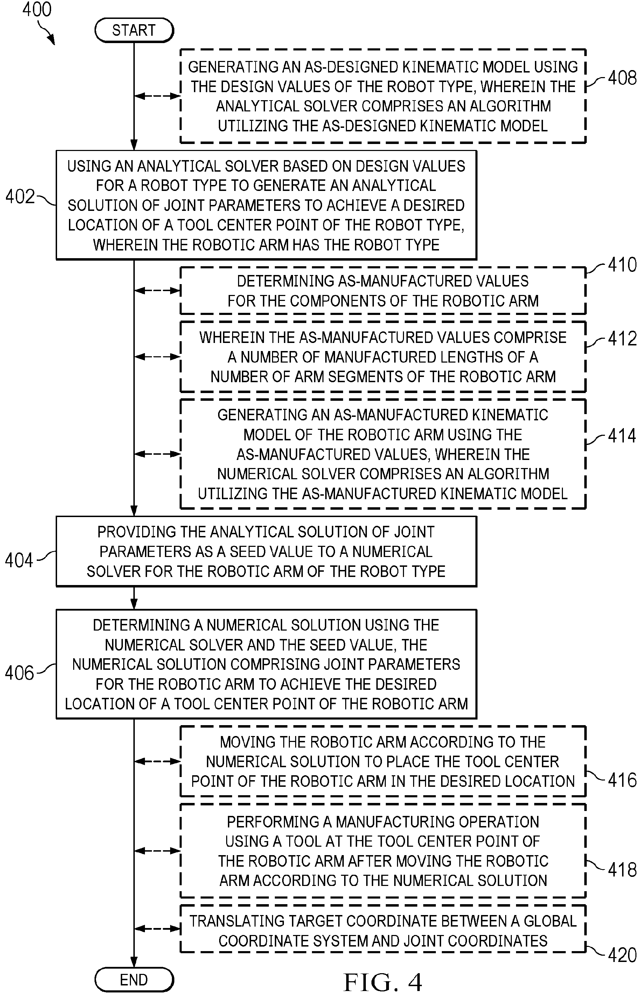

Turning now to **Figure 4****,** a flowchart of a method of reducing calculation time for inverse kinematics for a robotic arm is depicted in accordance with an illustrative example. Method **400** can be performed to determine joint parameters for a robotic arm to perform manufacturing operations on a portion of aircraft **100** of **Figure 1****.** Method **400** can be performed using analytical solver **250** and numerical solver **252** of **Figure 2****.** Method **400** can be performed to determine joint parameters using inverse kinematics for robotic arm **300** of **Figure 3****.**

Method **400** uses an analytical solver based on design values for a robot type to generate an analytical solution of joint parameters to achieve a desired location of a tool center point of the robot type, wherein the robotic arm has the robot type (operation **402).** The desired location may be referred to as a target coordinate. Method **400** provides the analytical solution of joint parameters as a seed value to a numerical solver for the robotic arm of the robot type (operation **404**). Method **400** determines a numerical solution using the numerical solver and the seed value, the numerical solution comprising joint parameters for the robotic arm to achieve the desired location of a tool center point of the robotic arm (operation **406).** Afterwards, method **400** terminates.

The analytical model is based on the design values for the robot type. In some illustrative examples, method **400** generates an as-designed kinematic model using the design values of the robot type, wherein the analytical solver comprises an algorithm utilizing the as-designed kinematic model (operation **408**).

In some illustrative examples, method **400** determines as-manufactured values for the components of the robotic arm (operation **410**). In some illustrative examples, the as-manufactured values comprise a number of manufactured lengths of a number of arm segments of the robotic arm (operation **412**). In some illustrative examples, method **400** generates an as-manufactured kinematic model of the robotic arm using the as-manufactured values, wherein the numerical solver comprises an algorithm utilizing the as-manufactured kinematic model (operation **414**).

In some illustrative examples, method **400** moves the robotic arm according to the numerical solution to place the tool center point of the robotic arm in the desired location (operation **416**). In some illustrative examples, method **400** performs a manufacturing operation using a tool at the tool center point of the robotic arm after moving the robotic arm according to the numerical solution (operation **418**). In some illustrative examples, method **400** translates the target coordinate between a global coordinate system and joint coordinates (operation **420)** .

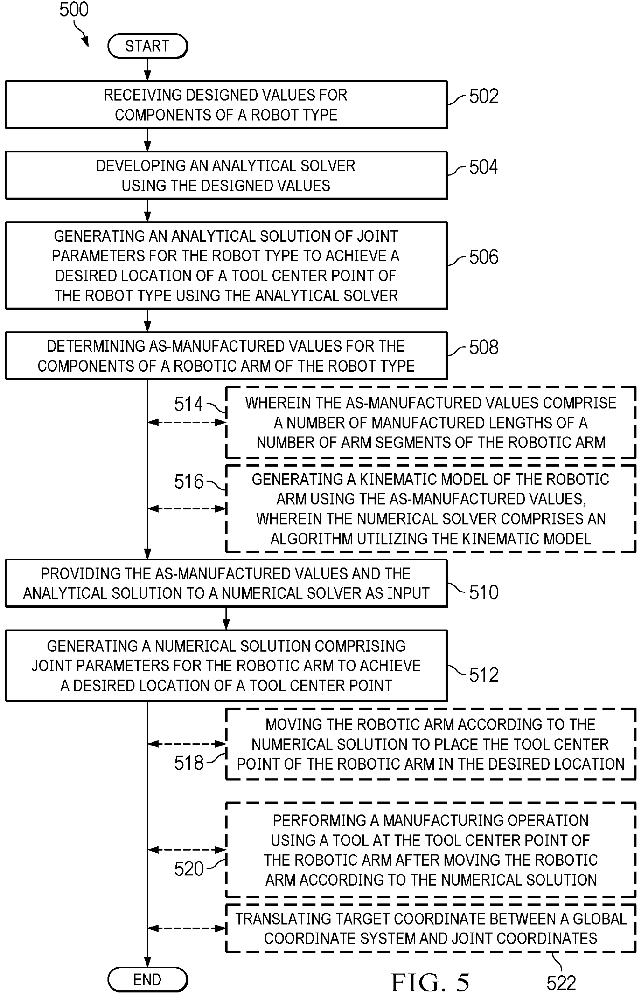

Turning now to **Figure 5****,** a flowchart of a method of reducing calculation time for inverse kinematics for a robotic arm is depicted in accordance with an illustrative example. Method **500** can be performed to determine joint parameters for a robotic arm to perform manufacturing operations on a portion of aircraft **100** of **Figure 1****.** Method **500** can be performed using analytical solver **250** and numerical solver **252** of **Figure 2****.** Method **500** can be performed to determine joint parameters using inverse kinematics for robotic arm **300** of **Figure 3****.**

Method **500** receives design values for components of a robot type (operation **502**). Method **500** develops an analytical solver using the design values (operation **504**). Method **500** generates an analytical solution of joint parameters for the robot type to achieve a desired location of a tool center point of the robot type using the analytical solver (operation **506**). Method **500** determines as-manufactured values for the components of a robotic arm of the robot type (operation **508).** Method **500** provides the as-manufactured values and the analytical solution to a numerical solver as input (operation **510**). Method **500** generates a numerical solution comprising joint parameters for the robotic arm to achieve a desired location of a tool center point (operation **512**). Afterwards, method **500** terminates.

In some illustrative examples, the as-manufactured values comprise a number of manufactured lengths of a number of arm segments of the robotic arm (operation **514**). In other illustrative examples, if the robot is a type of robot other than a robotic arm, the number of manufactured lengths can be of components other than arm segments. In some illustrative examples, method **500** generates a kinematic model of the robotic arm using the as-manufactured values, wherein the numerical solver comprises an algorithm utilizing the kinematic model (operation **516**).

In some illustrative examples, method **500** moves the robotic arm according to the numerical solution to place the tool center point of the robotic arm in the desired location (operation **518**). In some illustrative examples, method **500** performs a manufacturing operation using a tool at the tool center point of the robotic arm after moving the robotic arm according to the numerical solution (operation **520**). In some illustrative examples, method **500** translates target coordinate between a global coordinate system and joint coordinates (operation **522**).

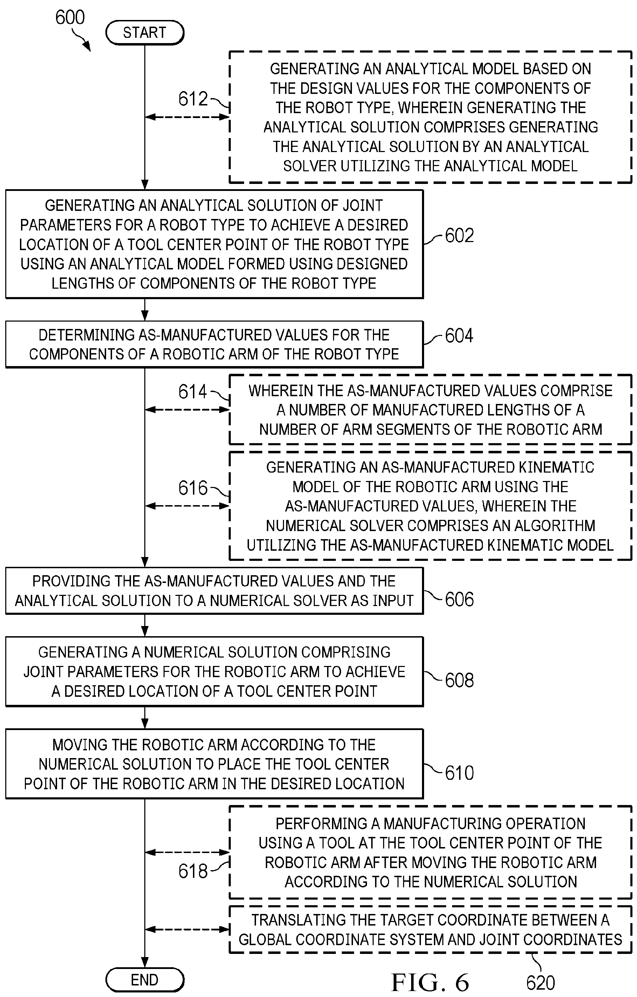

Turning now to **Figure 6****,** a flowchart of a method of reducing calculation time for inverse kinematics for a robotic arm is depicted in accordance with an illustrative example. Method **600** can be performed to determine joint parameters for a robotic arm to perform manufacturing operations on a portion of aircraft **100** of **Figure 1****.** Method **600** can be performed using analytical solver **250** and numerical solver **252** of **Figure 2****.** Method **600** can be performed to determine joint parameters using inverse kinematics for robotic arm **300** of **Figure 3****.**

Method **600** generates an analytical solution of joint parameters for a robot type to achieve a desired location of a tool center point of the robot type using an analytical model formed using designed lengths of components of the robot type (operation **602**). Method **600** determines as-manufactured values for the components of a robotic arm of the robot type (operation **604**). Method **600** provides the as-manufactured values and the analytical solution to a numerical solver as input (operation **606**). Method **600** generates a numerical solution comprising joint parameters for the robotic arm to achieve a desired location of a tool center point (operation **608**). Method **600** moves the robotic arm according to the numerical solution to place the tool center point of the robotic arm in the desired location (operation **610**). Afterwards, method **600** terminates.

In some illustrative examples, method **600** generates an analytical model based on the design values for the components of the robot type, wherein generating the analytical solution comprises generating the analytical solution by an analytical solver utilizing the analytical model (operation **612**). In some illustrative examples, the as-manufactured values comprise a number of manufactured lengths of a number of arm segments of the robotic arm (operation **614**). In some illustrative examples, method **600** generates an as-manufactured kinematic model of the robotic arm using the as-manufactured values, wherein the numerical solver comprises an algorithm utilizing the as-manufactured kinematic model (operation **616**).

In some illustrative examples, method **600** performs a manufacturing operation using a tool at the tool center point of the robotic arm after moving the robotic arm according to the numerical solution (operation **618**). In some illustrative examples, method **600** translates the target coordinate between a global coordinate system and joint coordinates (operation **620**).

As used herein, the phrase "at least one of," when used with a list of items, means different combinations of one or more of the listed items may be used and only one of each item in the list may be needed. For example, "at least one of item A, item B, or item C" may include, without limitation, item A, item A and item B, or item B. This example also may include item A, item B, and item C, or item B and item C. Of course, any combination of these items may be present. In other examples, "at least one of" may be, for example, without limitation, two of item A; one of item B; and ten of item C; four of item B and seven of item C; or other suitable combinations. The item may be a particular object, thing, or a category. In other words, at least one of means any combination items and number of items may be used from the list but not all of the items in the list are required.

As used herein, "a number of," when used with reference to items means one or more items.

The flowcharts and block diagrams in the different depicted examples illustrate the architecture, functionality, and operation of some possible implementations of apparatuses and methods in an illustrative example. In this regard, each block in the flowcharts or block diagrams may represent at least one of a module, a segment, a function, or a portion of an operation or step.

In some alternative implementations of an illustrative example, the function or functions noted in the blocks may occur out of the order noted in the figures. For example, in some cases, two blocks shown in succession may be executed substantially concurrently, or the blocks may sometimes be performed in the reverse order, depending upon the functionality involved. Also, other blocks may be added in addition to the illustrated blocks in a flowchart or block diagram. Some blocks may be optional. For example, operation **408** through operation **420** may be optional. For example, operation **514** through operation **522** may be optional. As another example, operation **612** through operation **620** may be optional.

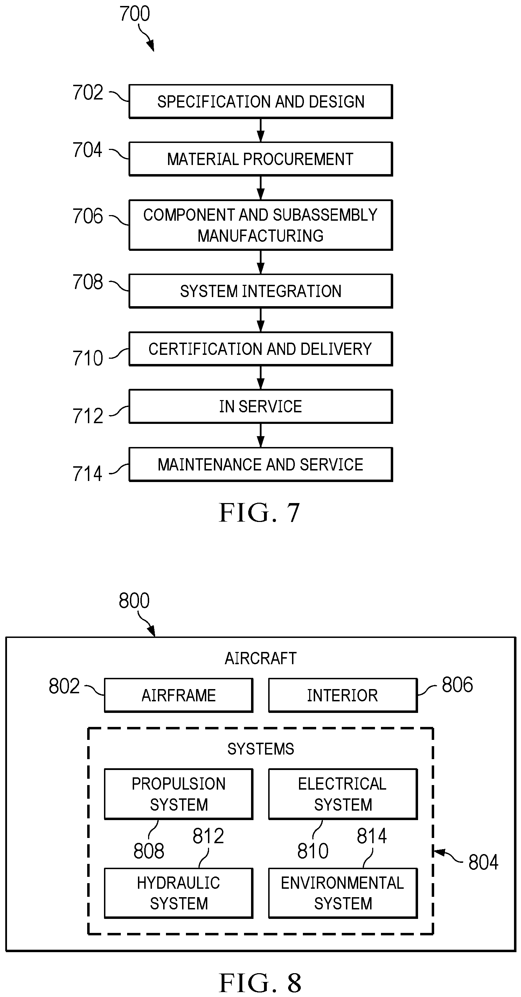

Illustrative examples of the present disclosure may be described in the context of aircraft manufacturing and service method **700** as shown in **Figure 7** and aircraft **800** as shown in **Figure 8****.** Turning first to **Figure 7****,** an illustration of an aircraft manufacturing and service method in the form of a block diagram is depicted in accordance with an illustrative example. During preproduction, aircraft manufacturing and service method **700** may include specification and design **702** of aircraft **800** in **Figure 8** and material procurement **704.**

During production, component and subassembly manufacturing **706** and system integration **708** of aircraft **800** takes place. Thereafter, aircraft **800** may go through certification and delivery **710** in order to be placed in service **712.** While in service **712** by a customer, aircraft **800** is scheduled for routine maintenance and service **714,** which may include modification, reconfiguration, refurbishment, or other maintenance and service.

Each of the processes of aircraft manufacturing and service method **700** may be performed or carried out by a system integrator, a third party, and/or an operator. In these examples, the operator may be a customer. For the purposes of this description, a system integrator may include, without limitation, any number of aircraft manufacturers and major-system subcontractors; a third party may include, without limitation, any number of vendors, subcontractors, and suppliers; and an operator may be an airline, a leasing company, a military entity, a service organization, and so on.

With reference now to **Figure 8****,** an illustration of an aircraft in the form of a block diagram is depicted in which an illustrative example may be implemented. In this example, aircraft **800** is produced by aircraft manufacturing and service method **700** of **Figure 7** and may include airframe **802** with plurality of systems **804** and interior **806.** Examples of systems **804** include one or more of propulsion system **808,** electrical system **810,** hydraulic system **812,** and environmental system **814.** Any number of other systems may be included.

Apparatuses and methods embodied herein may be employed during at least one of the stages of aircraft manufacturing and service method **700.** One or more illustrative examples may be manufactured or used during at least one of component and subassembly manufacturing **706,** system integration **708,** in service **712,** or maintenance and service **714** of **Figure 7****.**

The illustrative examples decrease calibrated inverse kinematics computation time. Implementation of the illustrative examples allows precise robotic movement calculations without large motion planning computation times for scenarios such as offline planning where many thousands of such computations need to be performed.

The illustrative examples a hybrid of analytical and numerical solvers instead of either analytical or numerical solvers. The illustrative examples are faster than a numerical solver, uses calibrated kinematics, and provides all possible solutions (allows motion planners to optimize for different criteria, singularity, velocity). The illustrative examples command the robot according to an iterative approach to refine end point location until desired accuracy is reached.

The result is a solver that produces calibrated inverse kinematics solutions faster than a traditional numerical-only solver whilst giving the complete solution set of an analytical solver. The illustrative examples decrease calibrated inverse kinematics computation time. Implementation of this algorithm allows precise robotic movement calculations without large motion planning computation times for scenarios such as offline planning where many thousands of such computations need to be performed.

The description of the different illustrative examples has been presented for purposes of illustration and description and is not intended to be exhaustive or limited to the examples in the form disclosed. Many modifications and variations will be apparent to those of ordinary skill in the art. Further, different illustrative examples may provide different features as compared to other illustrative examples. The example or examples selected are chosen and described in order to best explain the principles of the examples, the practical application, and to enable others of ordinary skill in the art to understand the disclosure for various examples with various modifications as are suited to the particular use contemplated.

## Claims

1. A method (400) of reducing calculation time for inverse kinematics (248) for a robotic arm (202) comprising:
using (402) an analytical solver (250) based on design values (205) for a robot type (204) to generate an analytical solution of joint parameters (254) to achieve a desired location (226) of a tool center point (206) of the robot type (204), wherein the robotic arm (202) has the robot type (204);
providing (404) the analytical solution of joint parameters (254) as a seed value (260) to a numerical solver (252) for the robotic arm (202) of the robot type (204); and
determining (406) a numerical solution (262) using the numerical solver (252) and the seed value (260), the numerical solution (262) comprising joint parameters (268) for the robotic arm (202) to achieve the desired location (226) of a tool center point (206) of the robotic arm (202).

2. The method (400) of claim 1 further comprising:
determining (410) as-manufactured values (218) for the components (208) of the robotic arm (202).

3. The method (400) of claim 2, wherein (412) the as-manufactured values (218) comprise a number of manufactured lengths (216) of a number of arm segments (212) of the robotic arm (202).

4. The method (400) of claim 2 or 3, further comprising:
generating (414) an as-manufactured kinematic model (264) of the robotic arm (202) using the as-manufactured values (218), wherein the numerical solver (252) comprises an algorithm utilizing the as-manufactured kinematic model (264).

5. The method (400) of any of the preceding claims, further comprising:
moving (416) the robotic arm (202) according to the numerical solution (262) to place the tool center point (206) of the robotic arm (202) in the desired location (226), and preferably further comprising:
performing (418) a manufacturing operation (224) using a tool (222) at the tool center point (206) of the robotic arm (202) after moving the robotic arm (202) according to the numerical solution (262).

6. The method (400) of any of the preceding claims, further comprising:
generating (408) an as-designed kinematic model (258) using the design values (205) of the robot type (204), wherein the analytical solver (250) comprises an algorithm utilizing the as-designed kinematic model (258) .

7. The method (400) of any of the preceding claims, wherein determining the numerical solution (262) comprises: translating (420) target coordinate between a global coordinate system and joint coordinates.

8. A method (500) of reducing calculation time for inverse kinematics (248) for a robotic arm (202) comprising:
receiving (502) design values (205) for components (208) of a robot type (204);
developing (504) an analytical solver (250) using the design values (205);
generating (506) an analytical solution of joint parameters (254) for the robot type (204) to achieve a desired location (226) of a tool center point (206) of the robot type (204) using the analytical solver (250);
determining (508) as-manufactured values (218) for the components (208) of a robotic arm (202) of the robot type (204);
providing (510) the as-manufactured values (218) and the analytical solution (254) to a numerical solver (252) as input; and
generating (512) a numerical solution (262) comprising joint parameters (268) for the robotic arm (202) to achieve a desired location (226) of a tool center point (206).

9. The method (500) of claim 8, further comprising:
moving (518) the robotic arm (202) according to the numerical solution (262) to place the tool center point (206) of the robotic arm (202) in the desired location (226), and preferably further comprising:
performing (520) a manufacturing operation (224) using a tool (222) at the tool center point (206) of the robotic arm (202) after moving the robotic arm (202) according to the numerical solution (262).

10. The method (500) of claim 8 or 9, wherein:
(514) the as-manufactured values (218) comprise a number of manufactured lengths (216) of a number of arm segments (212) of the robotic arm (202); and/or
(522) determining the numerical solution (262) comprises translating target coordinate between a global coordinate system and joint coordinates.

11. The method (500) of any one of claims 8-10, further comprising:
generating (516) a kinematic model of the robotic arm (202) using the as-manufactured values (218), wherein the numerical solver (252) comprises an algorithm utilizing the kinematic model.

12. A method (600) of reducing calculation time for inverse kinematics (248) for a robotic arm (202) comprising:
generating (602) an analytical solution of joint parameters (254) for a robot type (204) to achieve a desired location (226) of a tool center point (206) of the robot type (204) using an analytical model formed using designed lengths of components (208) of the robot type (204);
determining (604) as-manufactured values (218) for the components (208) of a robotic arm (202) of the robot type (204);
providing (606) the as-manufactured values (218) and the analytical solution (254) to a numerical solver (252) as input;
generating (608) a numerical solution (262) comprising joint parameters (268) for the robotic arm (202) to achieve a desired location (226) of a tool center point (206) using the numerical solver (252); and
moving (610) the robotic arm (202) according to the numerical solution (262) to place the tool center point (206) of the robotic arm (202) in the desired location (226) .

13. The method (600) of claim 12, further comprising:
performing (618) a manufacturing operation (224) using a tool (222) at the tool center point (206) of the robotic arm (202) after moving the robotic arm (202) according to the numerical solution (262).

14. The method (600) of claim 12 or 13, wherein:
(614) the as-manufactured values (218) comprise a number of manufactured lengths (216) of a number of arm segments (212) of the robotic arm (202); and/or
(620) generating the numerical solution (262) comprises translating target coordinate between a global coordinate system and joint coordinates.

15. The method (600) of any one of claims 12-14, further comprising:
generating (616) an as-manufactured kinematic model (264) of the robotic arm (202) using the as-manufactured values (218), wherein the numerical solver (252) comprises an algorithm utilizing the as-manufactured kinematic model (264); and/or
generating (612) an analytical model based on the design values (205) for the components (208) of the robot type (204), wherein generating the analytical solution (254) comprises generating the analytical solution (254) by an analytical solver (250) utilizing the analytical model.
